Europäisches Patentamt

European Patent Office

Office européen des brevets

(11) Veröffentlichungsnummer: **0 223 923**
**A2**

## (12) EUROPÄISCHE PATENTANMELDUNG

(21) Anmeldenummer: 86110687.0

(22) Anmeldetag: 01.08.86

(51) Int. Cl.4: **B60R 1/06**

(30) Priorität: 23.11.85 DE 8533057 U

(43) Veröffentlichungstag der Anmeldung:
03.06.87 Patentblatt 87/23

(84) Benannte Vertragsstaaten:
AT DE FR GB IT NL SE

(71) Anmelder: **Hagus C. Luchtenberg GmbH &
Co. KG**
**Wiesenstrasse 8-10**
**D-5650 Solingen-Wald(DE)**

(72) Erfinder: **Luchtenberg, Curt**
**Sonnenschein 6**
**D-5650 Solingen - Wald(DE)**

(74) Vertreter: **Selting, Günther, Dipl.-Ing. et al**
**Deichmannhaus am Hauptbahnhof**
**D-5000 Köln 1(DE)**

(54) Fahrzeugaussenspiegel.

(57) Der Spiegel eignet sich als Rechtsspiegel,
sowohl als beifahrerseitiger Spiegel (bei Linkslenkung) als auch als fahrerseitiger Spiegel (bei Rechtslenkung). Zur Einstellung des Spiegelgehäuses (15)
auf die jeweilige Winkelstellung ist eine Einstellvorrichtung (32,33,34) vorgesehen. Die Einstellung des
Spiegels durch den Fahrer erfolgt durch Verstellung
des Spiegelglases, das relativ zu dem Spiegelgehäuse (15) bewegbar ist.

FIG.2

## Fahrzeugaußenspiegel

Die Erfindung betrifft einen Fahrzeugaußenspiegel mit einem am Fahrzeug zu befestigenden Spiegelfuß und einem um eine im wesentlichen vertikale Achse schwenkbar am Spiegelfuß angebrachten Spiegelgehäuse, in dem ein verstellbares Spiegelglas angeordnet ist.

Die Außenspiegel von Fahrzeugen müssen verstellbar sein, um eine Anpassung des Blickfeldes an die jeweilige Fahrerposition zu ermöglichen. Es ist bekannt, bei Fahrzeugaußenspiegeln das Spiegelgehäuse fahrzeugseitig fest anzuordnen und das Spiegelglas an einem verstellbaren Spiegelträger zu befestigen, der innerhalb des Spiegelgehäuses um zwei Achsen herum geschwenkt werden kann.

Außer der genannten Einstellmöglichkeit erfordern es die Sicherheitsvorschriften, daß das Spiegelgehäuse am Fahrzeug klappbar angebracht ist und an die Karosserie angeschwenkt werden kann, wenn ein Stoß auf das Spiegelgehäuse trifft.

Die genannten Einstell-und Klappmöglichkeiten sind bei Fahrzeugspiegeln generell vorhanden; die Erfindung befaßt sich jedoch mit einem anderen Problem, das bei Spiegeln der genannten Art auftritt: Die Fahrzeugaußenspiegel werden als fahrerseitiger Linksspiegel und als beifahrerseitiger Rechtsspiegel hergestellt, die beide auf die Position des Fahrers eingestellt sind. Dies bedeutet, daß der fahrerseitige Linksspiegel nahezu rechtwinklig vom Fahrzeug absteht, während der Rechtsspiegel einen kleineren Anstellwinkel hat. Die Gehäuse von Linksspiegel und Rechtsspiegel haben daher unterschiedliche Anstellwinkel in Bezug auf die Fahrzeuglängsrichtung. Wenn nun solche Spiegel zusätzlich auch für Fahrzeuge mit Rechtslenkung benutzt werden sollen, sind zwei weitere Spiegeltypen erforderlich, weil dann nämlich das Spiegelgehäuse des linken Spiegels einen kleineren Anstellwinkel zur Fahrzeugkarosserie haben muß als das Spiegelgehäuse des rechten Spiegels. Bei Fahrzeugen, die sowohl mit Rechtslenkung als auch mit Linkslenkung geliefert werden, müssen daher insgesamt vier verschiedene Spiegeltypen vorgesehen und bereitgehalten werden.

Der Erfindung liegt die Aufgabe zugrunde, einen Fahrzeugaußenspiegel der eingangs genannten Art zu schaffen, der als Linksspiegel sowohl die Funktion des fahrerseitigen Spiegels als auch diejenige des beifahrerseitigen Spiegels ausführen kann und als Rechtsspiegel ebenfalls beide Funktionen ausführen kann.

Zur Lösung dieser Aufgabe ist erfindungsgemäß vorgesehen. daß zwischen dem Spiegelfuß oder einem einrastend am Spiegelfuß festgelegten Drehorgan und dem Spiegelgehäuse eine feststellbare Einstellvorrichtung vorgesehen ist, die eine Einstellung des Spiegelgehäuses auf zwei verschiedene Schwenkstellungen ermöglicht.

Der erfindungsgemäße Fahrzeugaußenspiegel kann z.B. als Linksspiegel sowohl als fahrerseitiger als auch als beifahrerseitiger Spiegel benutzt werden. wobei jeweils das Spiegelgehäuse auf eine andere Schwenkstellung fest eingestellt wird. Die beiden Schwenkstellungen unterscheiden sich in der Regel um einen Winkel von etwa 15°. Für Fahrzeuge. die wahlweise mit Rechtslenkung oder Linkslenkung ausgestattet werden, sind, sofern zwei Außenspiegel vorgesehen sind, nur zwei unterschiedliche Spiegeltypen erforderlich. Jeder Außenspiegel kann in Abhängigkeit von der Anordnung des Fahrersitzes entweder als fahrerseitiger oder als beifahrerseitiger Spiegel eingestellt werden. Die einmal gewählte Einstellung wird bleibend fixiert.

Die Erfindung ist generell bei solchen Fahrzeugaußenspiegeln anwendbar, bei denen das Spiegelgehäuse normalerweise unter einem festen Winkel von der Karosserie absteht, d.h. bei solchen Spiegeln, bei denen zur individuellen Einstellung auf die Fahrerposition nicht das gesamte Spiegelgehäuse. sondern nur das Spiegelglas innerhalb des Spiegelgehäuses verstellt wird. Bei derartigen Spiegeln ist -unabhängig davon, ob die Spiegel abklappbar sind -der Zustand. in dem das Spiegelgehäuse relativ zur Fahrzeugkarosserie montiert wird. wählbar. Bei solchen Spiegeln, bei denen das gesamte Spiegelgehäuse zur Einstellung auf die Fahrerposition stufenlos verstellbar ist, tritt das der Erfindung zugrundeliegende Problem nicht auf. Dieses Problem ergibt sich nur dann, wenn das Spiegelgehäuse im Betriebszustand (im nicht-abgeklappten Zustand) unter einem vorgegebenen festen Winkel von der Karosserie absteht. Dieser feste Winkel kann mit Hilfe der Einstellvorrichtung eingestellt werden. Ein besonderer Vorteil besteht darin, daß unabhängig davon, ob der Spiegel als fahrerseitiger Spiegel oder als Beifahrerspiegel benutzt wird, ein begrenzter Schwenkbereich des Spiegelglases innerhalb des Spiegelgehäuses ausreicht. um die Einstellung auf die Fahrerposition vorzunehmen. Dies liegt daran, daß das Spiegelgehäuse vorab auf die jeweilige Funktion des Spiegels eingestellt wird und daß anschließend nur noch individuelle Einstellungen in Bezug auf den Fahrer durchgeführt werden müssen, nicht aber in Bezug auf die Fahrersitzanordnung.

Gemäß einer vorteilhaften Weiterbildung der Erfindung ist zwischen dem Spiegelfuß oder einem einrastend am Spiegelfuß festgelegten Drehorgan und dem Spiegelgehäuse eine Schwenkbegrenzungsvorrichtung vorgesehen, deren Endanschläge den beiden Schwenkstellungen entsprechen. Die Schwenkbegrenzungsvorrichtung erleichtert das Einstellen auf eine der beiden Schwenkpositionen, in denen die Einstellvorrichtung wirksam ist.

Der Spiegelfuß kann ein hohles Rohr aufweisen, auf dem ein kappenförmiges Drehorgan sitzt; das Drehorgan taucht in eine Ausnehmung des Spiegelgehäuses ein; eine elastische Spannvorrichtung zieht das Drehorgan und das Spiegelgehäuse gegen den Spiegelfuß und an dem Drehorgan und dem Spiegelfuß sind ineinandergreifende Rastelemente vorgesehen. Das Drehorgan bildet hierbei eine Einrichtung, die das Abklappen des Spiegels an die Fahrzeugkarosserie ermöglicht und beim anschließenden Zurückstellen des Spiegels bewirkt, daß das Spiegelgehäuse wieder in der Normalstellung einrastet.

Eine vorteilhafte Ausführungsform der Erfindung ist dadurch gekennzeichnet, daß die Spannvorrichtung einen hohlen Schaft aufweist, der sich vom Spiegelgehäuse in den Spiegelfuß erstreckt. Durch den rohrförmigen hohlen Schaft hindurch, können Kabel vom Spiegelfuß in das Spiegelgehäuse verdeckt eingeführt werden, um eine elektrische Enteisungsvorrichtung und/oder eine elektrische Verstellvorrichtung mit Strom zu versorgen. Das Kabel wird verdeckt durch das Innere des Gelenks hindurchgeführt, welches das Spiegelgehäuse mit dem Spiegelfuß verbindet. Dadurch wird sichergestellt, daß das Kabel nicht außen an dem Gelenk vorbeigeführt werden muß.

Im folgenden wird unter Bezugnahme auf die Zeichnungen ein Ausführungsbeispiel der Erfindung näher erläutert.

Es zeigen:

Fig. 1 eine schematische Draufsicht eines Fahrzeugs mit zwei Außenspiegeln zur Verdeutlichung der Funktionen von fahrerseitigem und beifahrerseitigem Spiegel bei Fahrzeugen mit Rechtslenkung und Linkslenkung,

Fig. 2 eine Explosionsdarstellung des einen Fahrzeugspiegels,

Fig. 3 einen Längsschnitt durch das Gelenk des Fahrzeugspiegels,

Fig. 4 einen Schnitt entlang der Linie IV-IV von Fig. 3 bei einem fahrerseitigen Rechtsspiegel, und

Fig.5 die gleiche Darstellung wie Fig. 4 bei einem beifahrerseitigen Rechtsspiegel.

In Fig. 4 ist in durchgezogenen Linien das Lenkrad 10 bei einem Fahrzeug mit Linkslenkung dargestellt. Der Kopf des Fahrers ist mit 12 bezeichnet. Das Gehäuse des fahrerseitigen Spiegels 13 steht bei einem solchen Fahrzeug mit Linkslenkung nahezu rechtwinklig von der Fahrzeugkarosserie ab. Der Rechtsspiegel 14 hat eine größere Schrägstellung als der Linksspiegel 13, d.h. der Winkel, den das Spiegelgehäuse zur Fahrzeugkarosserie bildet, ist spitzer als beim Spiegel 13.

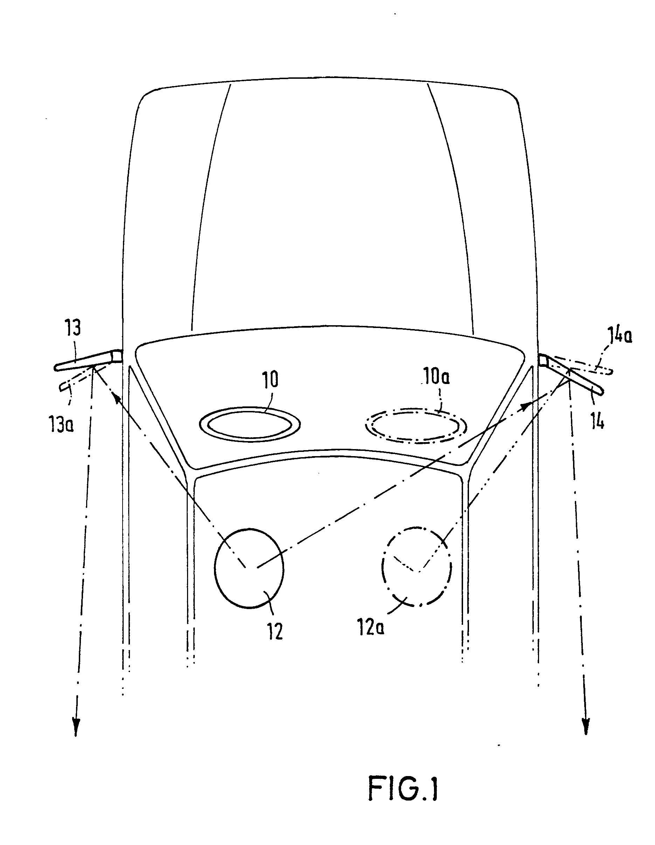

Die gleichen Verhältnisse sind außerdem bei einem Fahrzeug mit Rechtslenkung in Fig. 1 strichpunktiert dargestellt, wobei das Lenkrad 10a und der Kopf des Fahrers mit 12a bezeichnet sind. Man erkennt, daß hierbei das Gehäuse des Rechtsspiegels 14a nahezu senkrecht von der Fahrzeugkarosserie absteht, während das Gehäuse des Linksspiegels 13a, der den Beifahrerspiegel bildet, einen kleineren Anstellwinkel hat.

Das nachfolgend beschriebene Ausführungsbeispiel bezieht sich auf den Rechtsspiegel 14 bzw. 14a, dessen Gehäuse auf die beiden dargestellten Positionen eingestellt werden kann. In gleicher Weise kann entsprechend auch der Linksspiegel ausgebildet sein.

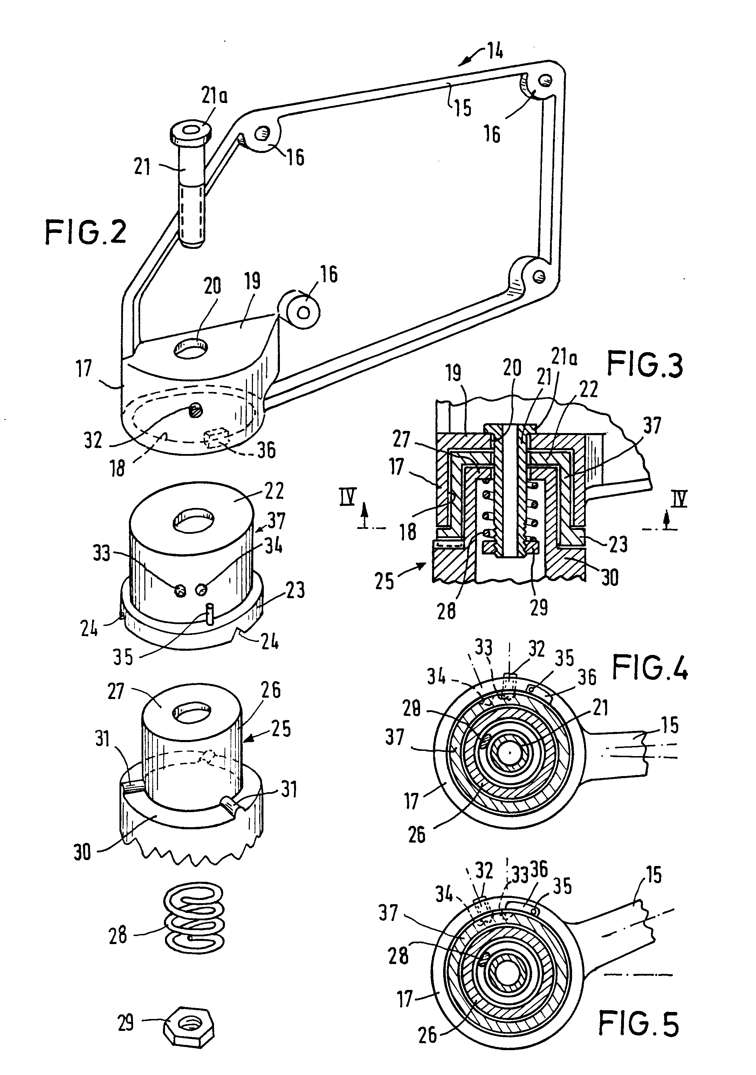

In Fig. 2 ist von dem Spiegel 14 nur das Spiegelgehäuse 15 dargestellt; das Spiegelglas und der Spiegelglasträger sowie die Verstellvorrichtung zum Verstellen des Spiegelglases in Bezug auf das Spiegelgehäuse 15 sind aus Gründen der Übersichtlichkeit fortgelassen. Auch der äußere Rand des Spiegelgehäuses 15 ist nicht dargestellt. Der Verstellantrieb sowie das Schwenklager für den Spiegelglasträger sind an Befestigungseinrichtungen 16 im Innern des Spiegelgehäuses 15 befestigt.

Das Spiegelgehäuse 15 weist ein Lagerteil 17 mit einer zylindrischen Ausnehmung 18 mit vertikaler Achse auf. Die Ausnehmung 18 wird nach oben durch eine horizontale Wand 19 begrenzt, welche ein Loch 20 zum Hindurchstecken des Schaftes 21 aufweist. Der Schaft kann auch als Hohlniet ausgebildet sein. In diesem Fall würde die Mutter 29 entfallen. In die Ausnehmung 18 ragt von unten her das kappenförmige zylindrische Drehorgan 37 hinein, dessen obere Wand 22 sich von unten her gegen die Wand 19 legt. Das Drehorgan 37 weist am unteren Ende einen radial abstehenden Flansch 23 auf, der unter den Rand des Lagerteils 17 greift. In der Unterseite des Flansches 23 befinden sich radiale Nuten 24.

Der starre am Fahrzeug montierte Spiegelfuß 25 ist mit einem aufragenden Zylinder 26 versehen, der passend in das Innere des Drehorgans 37 hineinragt und an seinem oberen Ende eine horizontale Wand 27 aufweist. Der Schaft 21 ragt durch miteinander fluchtende Löcher in den Wänden 19,22 und 27 hindurch und erstreckt sich in das Innere des Zylinders 26. Auf der Wand 19 ist der Schaft 21 mit einem Kopf 21a abgestützt. Eine den Schaft 21 im Innern des Zylinders 26 umgebende Schraubenfeder 28 drückt gegen die Unterseite der Wand 27 und stützt sich am entgegengesetzten Ende an einer Mutter 29 ab, die auf ein Gewinde des Schaftes 21 aufgeschraubt ist. Die Feder 28 drückt daher die Wände 27,22 und 19 axial gegeneinander.

Der Spiegelfuß 25 ist am unteren Ende des Zylinders 26 mit einem radialen Flansch 30 versehen, an dessen Oberseite radiale Rippen 31 vorgesehen sind. Jede der Rippen 31 wird von einer der Nuten 24 des Drehorgans 37 aufgenommen. Durch die Wirkung der Feder 28 werden die Nuten 24 über die Rippen 31 gedrückt. Die Nuten 24 und die Rippen 31 bilden ineinandergreifende Rastelemente, die unter der Wirkung der Feder 28 gegeneinandergedrückt werden, um den Spiegel in seiner Position festzuhalten. Bei einem gegen das Spiegelgehäuse wirkenden Schlag können die Rastelemente ausrasten und das Spiegelgehäuse kann an die Fahrzeugkarosserie angeklappt werden.

Zum Einstellen des Spiegels auf die beiden Positionen 14 und 14a ist die Einstellvorrichtung aus der Schraube 32 und den beiden Rastlöchern 33,34 vorgesehen. Die Schraube 32 ist in eine radiale Gewindebohrung der Wand des Lagerteils 17 eingeschraubt und ihr Ende ragt in eine der beiden Bohrungen 33 oder 34 des Drehorgans 21 hinein. Die Bohrungen 33 und 34 sind an dem Drehorgan 37 in gleicher Höhe angeordnet und sie haben einen Winkelabstand von etwa 15° voneinander. Wenn der Spiegel in der Position gemäß Fig. 4 als fahrerseitiger Spiegel benutzt wird, wird das Spiegelgehäuse relativ zu dem Drehorgan 21 so gedreht, daß die Achse der Schraube 32 mit derjenigen der Bohrung 33 fluchtet. Durch Festdrehen der Schraube 32 wird diese Position fixiert. Bei Benutzung des Spiegels als beifahrerseitiger Spiegel wird die Schraube 32 auf die Bohrung 34 eingestellt und in diese hineingeschraubt. Die Schraube 32 bildet also zusammen mit den Bohrungen 33 und 34 die Einstellvorrichtung zum Einstellen des Spiegelgehäuses 15 auf zwei verschiedene Schwenkstellungen.

Zum leichteren Auffinden der Schwenkposition dient die Schwenkbegrenzungsvorrichtung 35,36. Diese besteht aus dem von der Oberseite des Flansches 23 des Drehorgans 37 aufragenden Stift 35 und der an der Unterseite der Wand des Lagerteils 17 vorgesehenen Umfangsnut 36. Der Stift 35 ragt in die Nut 36 hinein und ist in dieser verschiebbar. Die Enden der Nut 36 bilden Endanschläge. Wenn der Stift 35 gegen ein Ende der Nut 36 stößt, befindet sich die Schraube 32 in Ausrichtung mit einer der Bohrungen 33 oder 34.

Wenn das Spiegelgehäuse 15 an die Karosserie angeklappt werden soll, rasten die Nuten 24 von den Stegen 31 aus. Beim anschließenden Zurückführen des Spiegelgehäuse in die Normalstellung rasten die Nuten wieder in den Stegen ein. Bei dem vorliegenden Ausführungsbeispiel ist die Möglichkeit des Einstellens des Spiegelgehäuses auf zwei verschiedene Winkelstellungen in Verbindung mit einem Abklappmechanismus beschrieben worden. Wenn ein Abklappmechanismus nicht vorhanden ist, ist die Einstellvorrichtung unmittelbar zwischen Spiegelfuß und Spiegelgehäuse wirksam, während sie bei Vorhandensein eines Abklappmechanismus zwischen dem rastend mit dem Spiegelfuß verbundenen Drehorgan 21 und dem Spiegelgehäuse wirksam ist.

## Ansprüche

1. Fahrzeugaußenspiegel mit einem am Fahrzeug zu befestigenden Spiegelfuß (25) und einem um eine im wesentlichen vertikale Achse - schwenkbar am Spiegelfuß (25) angebrachten Spiegelgehäuse (15), in dem ein verstellbares Spiegelglas angeordnet ist, **dadurch gekennzeichnet**, daß zwischen dem Spiegelfuß (25) oder einem einrastend am Spiegelfuß festgelegten Drehorgan (37) und dem Spiegelgehäuse (15) eine feststellbare Einstellvorrichtung (32,33,34) vorgesehen ist, die eine Einstellung des Spiegelgehäuses (15) auf zwei verschiedene Schwenkstellungen ermöglicht.

2. Fahrzeugaußenspiegel nach Anspruch 1, dadurch gekennzeichnet, daß zwischen Spiegelfuß (25) oder einem einrastend am Spiegelfuß befestigten Drehorgan (37) und dem Spiegelgehäuse (15) eine Schwenkbegrenzungsvorrichtung (35,36) vorgesehen ist, deren Endanschläge den beiden Schwenkstellungen entsprechen.

3. Fahrzeugaußenspiegel nach Anspruch 1 oder 2, dadurch gekennzeichnet, daß der Spiegelfuß (25) ein hohles Rohr (26) aufweist, auf dem ein kappenförmiges Drehorgan (37) sitzt, daß das Drehorgan (21) in eine Ausnehmung (18) des Spiegelgehäuses (15) eintaucht, daß eine elastische Spannvorrichtung (28,29) das Drehorgan (37) und das Spiegelgehäuse (15) gegen den Spiegelfuß - (25) zieht und daß an dem Drehorgan (37) und dem Spiegelfuß (25) ineinandergreifende Rastelemente (31,24) vorgesehen sind.

4. Fahrzeugaußenspiegel nach einem der Ansprüche 1 bis 3, dadurch gekennzeichnet, daß die Spannvorrichtung (28,29) einen hohlen Schaft (21) aufweist, der sich vom Spiegelgehäuse (15) in den Spiegelfuß (25) erstreckt.

FIG.1

FIG.2

FIG.3

FIG.4

FIG.5